# NEW EUROPEAN PATENT SPECIFICATION

(11) **EP 0 551 960 B2**
(45) Date of publication and mention of the opposition decision: **06.09.2006**
(45) Mention of the grant of the patent: 17.06.1998
(21) Application number: 93200108.4
(22) Date of filing: 15.01.1993
(51) Int. Cl.: A01J 7/00, A01J 7/04

(54) **An implement for automatically milking animals**
Vorrichtung zum automatischen Melken von Tieren
Dispositif de traite automatique d'animaux

(30) Priority: 17.01.1992 NL 9200091
(43) Date of publication of application: 21.07.1993
(73) Proprietor: MAASLAND N.V., 3155 PD Maasland (NL)
(72) Inventor: van der Lely, Cornelis, CH-6300 Zug (CH); van der Lely, Ary, NL-3155 PD Maasland (NL)
(74) Representative: Corten, Maurice Jean F.M.

(56) References cited:
- EP-A- 535 755
- EP-A- 0 189 954
- EP-A- 0 270 165
- EP-A- 0 300 582
- EP-A- 0 306 579
- EP-A- 0 332 232
- EP-A- 0 360 354
- EP-A- 0 476 771
- WO-A-90/07268
- GB-A- 2 218 888
- SU-A- 1 777 722
- US-A- 4 010 714
- US-A- 4 408 564
- US-A- 4 936 255
- US-A- 5 069 160

## Description

The invention relates to an implement for automatically milking an animal, comprising a milking parlour, a milking robot with a carrier member adapted to carry a number of teat cups and a cleaning device with cleaning elements for cleaning the teats of the udder of an animal to be milked.

Such an implement is known from EP-A2-0332232. In the implement described in that document, the milking robot and the deaning device are arranged at different longitudinal sides of the milking parlour, so that the entrance and exit of the milking parlour have to be arranged at the short sides of the milking parlour. In practice, however, it may be favourable to arrange the entrance and exit at one of the longitudinal sides of the milking parlour.

Therefore, according to the invention, the implement as described in the opening paragraph is characterized by the features of claim 1. By means of this measure the succession of deaning of the teats and the connection of the teat cups to the teats can be realized in an efficient way.

For a better understanding of how an implement for automatically milking an animal, with such a milking robot functions, reference will now be made to the accompanying drawings, in which:
Figure 1 is a plan view of a milking parlour comprising a milking robot, in which the outlines of an animal, in the present case a cow, are shown;
Figure 2 is a view of the milking robot, taken in the direction of arrow II-II in Figure 1;
Figure 3 is a plan view of an enlarged part of the robot arm, on which the teat cups are disposed;
Figure 4 is a side view, taken in the direction of arrow IV in Figure 3;
Figure 5 is a plan view in accordance with Figure 3, in which is schematically shown the position of the teat cups relative to the robot arm and their connection thereto during milking of an animal;
Figure 6 is a side view, taken in the direction of arrow VI in Figure 5;
Figure 7 is a cross-sectional view, taken on line VII-VII in Figure 3;
Figure 8 is a side view in accordance with Figure 6 of an alternative design of the connection of the teat cups to the robot arm; For understanding the invention reference is made to
Figure 9, which is a schematic plan view of a milking parlour as in Figure 1, in which the milking robot also includes a cleaning implement for the teats of the cow in the arrangement according to the invention.

In the drawings, corresponding components have been given the same reference numerale. The invention is in no way limited to the embodiment illustrated and described here; they only serve as an illustration of the inventive idea.

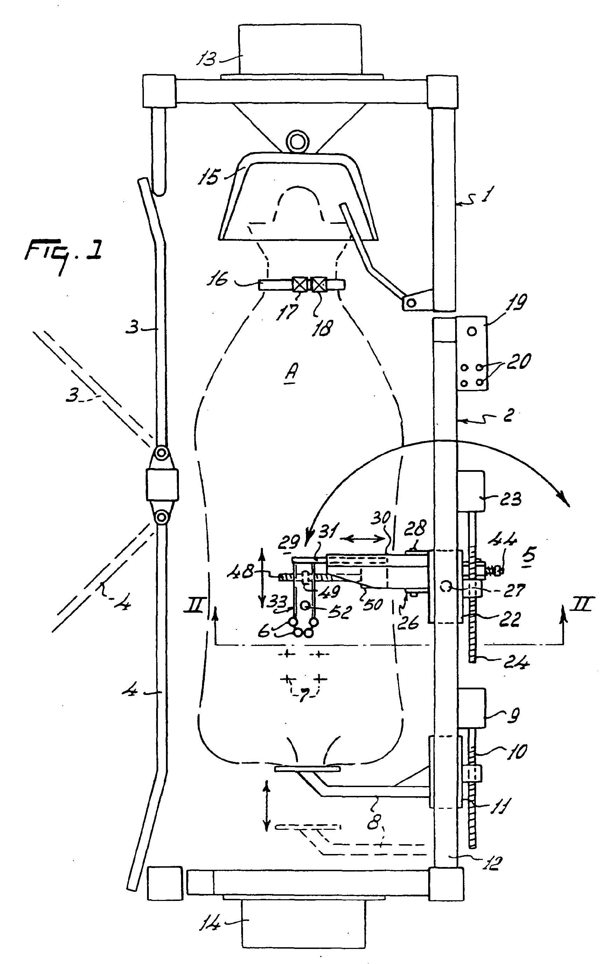

Figure 1 shows a milking parlour in which, inside a railing consisting of the front railing portion 1, the rear railing portion 2 and the railing doors 3 and 4, an animal, in the present case a cow A, is present The milking parlour includes a milking robot 5, by means of which the teat cups 6 can be connected to the schematically shown teats 7 of the udder of the cow A. For a rough determination of the starting position, the milking robot cooperates with a contacting member 8. The contacting member 8 can be moved with the aid of a stepper motor 9, a threaded spindle 10 connected thereto and a straight guide member 11 to over a horizontal carrier 12 which forms part of the rear railing portion 2. Such a carrier 12 can alternatively be provided against or next to an existing railing. The milking parlour comprises a computer system 13 which controls an automatic feeder. The computer system 13 of the automatic feeder operates independently of a computer system 14 for the milking robot and, each time it detects, identifies and moreover accepts an animal A in the milking parlour, it can deposit a quantity of fodder matched to the animal in a feed trough 15 attached to the front railing portion 1.

The animal is provided with a collar 16, to which two separate indication and information members 17 and 18 are attached. These members each separately supply control signals to the two computer systems 13, 14 and contribute to an independent action of both computers. The milking parlour is further provided with an indicator device 19 for measuring the milk flow coming from a teat 7 of the udder of the animal A. For each of the teats a warning light 20 is present, which lights up when it is determined via a sensor in a teat cup 6 or in the milk line 21 of a cup 6 that the milk flow has stopped or decreased to below a predetermined value. The indicator device 19 may alternatively be designed such that it has two warning lights for the milk flow from each teat 7, one warning light emitting green light during milking and the other one emitting red light when the milk flow from a related teat has decreased to below the preset threshold value. In a still further design, the indicator is an acoustic device in the form of a buzzer.

In the longitudinal direction of the milking parlour, i.e. in the direction of the imaginary line between head and tail of the animal A in the milking parlour, the milking robot 5 is slidably disposed on a horizontal carrier 12 which forms part of the rear railing portion 2. For that purpose, the milking robot 5 comprises a straight guide member 22, a stepper motor 23 driving a threaded spindle 24, which engages the straight guide member 22. The stepper motor 23 is controlled by the computer 14 of the milking robot.

Figure 2 shows at the bottom side of the straight guide member 22 a holder 26 which is arranged pivotably about a vertical shaft 27 connected to the straight guide member 22. A telescopic arm 29, consisting of a rigid portion 30 and a portion 31 slidable therein, is attached to the holder 26 capably of pivoting about a horizontal shaft 28. A carrier member 33 for the teat cups 6 is disposed at a square angle on the end of the slidable arm portion 31. The teat cups 6 are, seen in plan view, arranged in a V-form on the carrier member 33. The carrier member 33 includes a chamber portion 34 and a contacting member portion 35, which in this construction are one integral whole. The slidable arm portion and the teat cups attached thereto can be moved relative to the rigid arm portion 30 with the aid of a threaded spindle 48 which meshes with a threaded element 49 at the bottom side of the carrier member 33. The threaded spindle 48 is driven by a stepper motor 50, which is controlled by the computer system 14 of the milking robot 5.

Relative to the holder 26, the arm 29 is supported and activated pivotably by means of an adjusting cylinder 37. The piston rod thereof acts near the midway point of the rigid arm portion 30 on a horizontal shaft 38 connected between two lugs to the rigid arm portion. The adjusting cylinder 37 is located in the extension of the arm 29 and, in this situation, extends under the end of the vertical shaft 27 to a holder arm 40 of the holder 26. The cylinder portion of the adjusting cylinder 37 is supported relative to the holder arm 40 via a rod 41 which is provided in the extension of the cylinder and is passed through a bore in a block 42, which block 42 is connected pivotably to the holder arm 40 via horizontal stub axles 43. The end of the sliding rod 41, which is provided with thread, is fitted with an adjusting nut 44. Disposed between the cylinder portion of the adjusting cylinder 37 and the block 42 is a pressure spring 45, and a second pressure spring 46 is disposed between the adjusting nut 44 and the block 42.

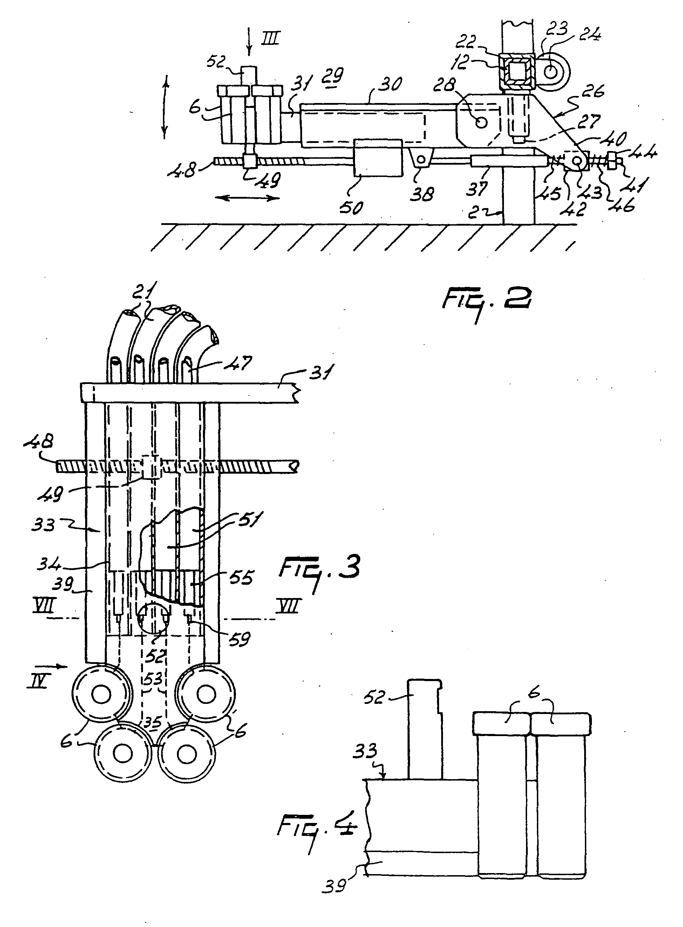

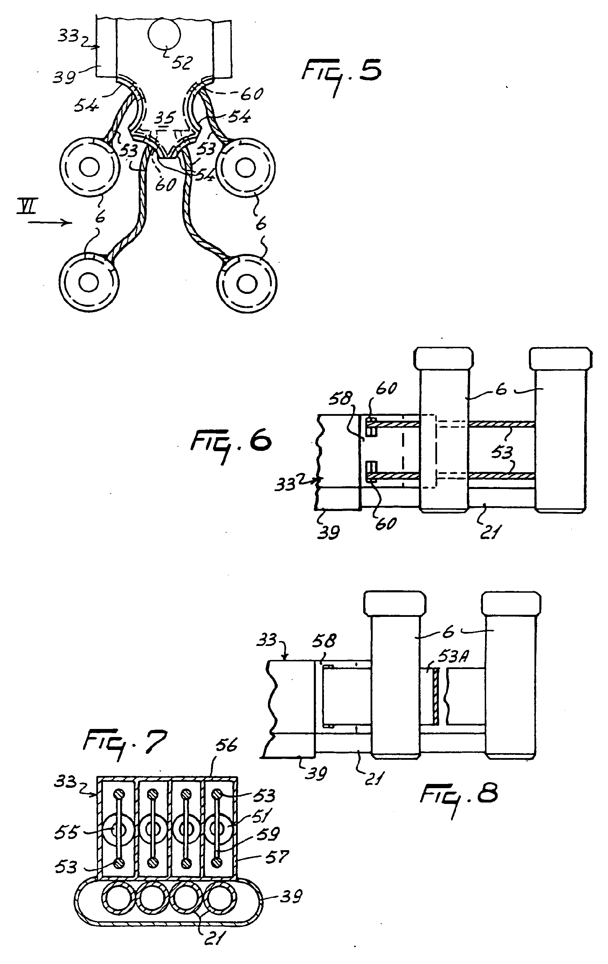

Figures 3 and 4 show a laser device 52 on the carrier member 33. The computer of the milking robot 5 determines the position of the carrier member 33, and consequently the position of the teat cups 6, with the aid of a laser device 52 which is disposed on the carrier member 33, projects to over the teat cups and supplies the computer 14 with signals on the basis of reflected radiation, so that the position of the teats 7 with respect to the carrier member 33 can be determined. The laser device 52 is positioned, seen with respect to the udder of the animal A near the teat cups arranged at the head end of the animal, on an imaginary perpendicular centre line, directed transversely to the arm 29, between the four teat cups. The leading teat cups 6 are spaced apart from each other by a smaller distance than the trailing pair of teat cups, so that each centre of a teat cup 6 indicates a point for the lines of an imaginary arrow tip which, in a plan view, is directed towards the udder.

In the chamber portion 34 of the carrier member 33 there are located, at a square angle to the arm 29, four rigidly arranged cylinders 51 which are pneumatically or hydraulically operable via supply lines 47. Connected to the piston rod 55 of each of the cylinders 51 is a flexible member 53, 53A, which is connected to a teat cup 6. In the rest position, the piston rod 55 of a cylinder 51 is retracted that far that a teat cup 6 is pulled up against a plane of contact 54 on the contacting portion 35 of the carrier member 33.

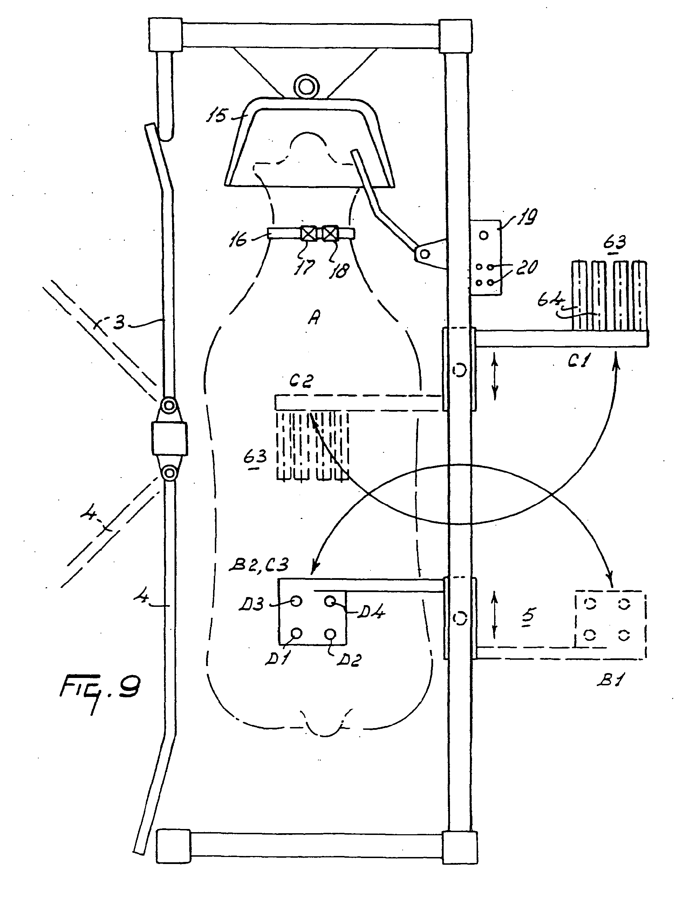

Figures 5, 6 and 8 show the configuration of the teat cups 6 during milking. In these drawings, the flexible member 53, 53A is not tightened, so that the milked animal A can move free from and to the robot arm 30. A plane of contact 54 has a curvature which at least substantially corresponds to the circumferential curvature of a teat cup 6. A plane of contact 54 is provided on the carrier member 33, which is in the form of an approximately square tube 34. The flexible member 53, 53A is preferably disposed between upright walls of the tube, so that, when it is tightened, a stable contact of the cup 6 with the contacting portion 35 is obtained in all circumstances. In the present embodiment, the plane of contact 54 is constituted by a wall 58 which closes the tube 34 and in which one or a plurality of apertures 60 for the flexible member 53, 53A are made. The apertures 60 are of a conical shape, so that the flexible member 53, 53A can smoothly be pulled through the apertures 60 at different angles. A flexible member 53, 53A is connected to a piston rod 55 via an intermediate member 59. The intermediate member may have the shape of an isosceles triangle, the intermediate member 59 being connected to the piston rod 55 near the apex angle of the said triangular shape. In accordance with a first design as shown in Figure 6, a flexible member can consist of two cables or cords 53 of a suitable flexible material, which cables 53 have one end connected in a lateral direction, i.e. to an upright wall of a teat cup 6. The other end may be attached to the intermediate member 59. In accordance with an alternative design as shown in Figure 8, the flexible member consists of a strip or belt 53A which extends in an upwardly directed plane.

Figure 7 shows, in a cross-sectional view, at the bottom side of the bottom wall 57 of the carrier member 33 a flattened tube 39, through which for the purpose of protection the milk hoses 21 of the teat cups 6 are passed. Such a tube 39, through which also further lines may be passed, prevents the robot arm 29 from being caught on obstacles, if any, by means of its lines and wires.

Although the teat cups 6 can be held against or onto the carrier member 33 by means of the cylinders 51, they can also be held against or onto the carrier member 33 by means of on/off switchable electromagnets. These electromagnets are mounted on the carrier member, e.g. near the planes of contact 54, and are individually operable. Particularly, they can be switched on together, while they can be switched off individually. The electromagnets work together with the cylinders 51. The cylinders 51 are able to pull up the teat cups 6 against or onto the carrier member 33 by means of one or more cables 53 or by means of the belt 53A, while the electromagnets are able to hold the teat cups against or onto the carrier member 33. With the aid of the computer 14, control signals can be generated which cause an off-switching of the electromagnet for a relevant teat cup 6 when said teat cup is to be attached to a teat, and an on-switching of said electromagnet when this teat cup has to be uncoupled from the relevant teat and be reconnected to the carrier member 33. The control signals can also provoke an activating of the cylinder 51 of this teat cup 6 for a predetermined time interval as soon as the teat cup 6 has to be uncoupled from said teat. After an electromagnet for a relevant teat cup is switched off, said teat cup is moved upwardly and sucked around a respective teat by means of a partial vacuum generated in said teat cup 6.

Figure 9 shows the implement according to the invention, comprising a milking parlour in which a cow A is present, and apart from the milk robot 5 a teat-cleaning device 63 with cleaning elements 64 for cleaning the teats of the animal to be milked. The milk robot 5 and the cleaning device 63 are displaceably mounted on a guide member arranged at one of the longitudinal sides of the milk box or milking parlour, while the carrier member 33 as well as the cleaning device 63 are rotatable about an upwardly directed axis from a position outside the milk box into a position under the animal. The direction of rotation of the carrier member from the rest position is opposite to the direction of rotation of the cleaning device 63 from the rest position. From their respective rest positions, the carrier member 33 and cleaning device 63 are able to follow circle-like curves to move through a foremost and a hindmost leg, the first part of which curves being directed opposite to each other. The robot does not only milk the cow A, but first cleans her teats 7. When the cow A enters the milking parlour through the entrance door 3, the teat cups 6 are in position B1 and the teat-cleaning device 63 is in position C1. As soon as the cow A has entered the milking parlour, the teat cleaning device 63 rotates through 180° to the position C2. Thereafter the cleaning device 63 moves along the horizontal carrier 12 to position C3. During these motions, the cleaning device 63 is at a somewhat lower level than the horizontal carrier 12, so that it can pass under it in an advantageous manner. The teats are cleaned in the position C3. Thereafter the cleaning device moves again to the position C2 and the teat cups automatically move from position B1 to position B2, the latter position corresponding to the position C3 of the cleaning device 63. The laser detector 52, or a different type of detector, determines the position of the teats 7, whereafter the teat cups are automatically coupled thereto. Immediately after the cow A has been milked, the teat cups 6 return to position B1 and, after a further cow A has arrived in the milking parlour, the teat cleaning device 63 moves again to position C3 and the procedure described is repeated.

The method of operation of the milking robot will now be described hereinafter.

The carrier member has four teat cups 6 which are connected to a carrier member 33 via flexible members 53, 53A. Taken in a direction from the rear, from left to right the teats might be numbered as follows: rear left D1, rear right D2, front left D3 and front right D4.

After the location of the teats 7 has been determined by the laser device 52 or another type of detector, the cups 6 move to the udder of the animal A. The teat cup for teat D1 is, for example, connected first. As soon as the cup 6 has been connected to the teat 7 and the milking operation has started, the air pressure in the pneumatic adjusting cylinder 51 of this teat cup 6 stops and the teat cup 6 then becomes freely movable relative to the carrier member 33. If an electromagnet has been used for the connection, the electric current is at that moment switched off from the electromagnet. Thereafter the carrier member 33 automatically moves to teat D2, where the same action occurs. This coupling method is repeated also for the teats D3 and D4. During milking, the teat cups 6 are flexibly connected to the robot arm 29 by means of the milk hoses 21 and the flexible members 53, 53A. This flexible connection is advantageous for the milk yield. The flexibility of the teat cup 6 connected to the teat 7 is still further increased if the robot arm 29 is moved by one or more hydraulic or pneumatic cylinders and if the pressure on the oil or of the air in the cylinders, which determine the location of the robot arm, is removed. Very advantageously, the connected teat cups 6 can also move in all directions in this manner.

In addition, the free motion of a connected teat cup 6 is promoted by the light and possibly flexible material, of which the carrier member 33 and the robot arm 29 have been made. The weight of this material is low and the mass forces are low.

When a teat 7 does not or practically not produce milk any more, the underpressure in the teat cup 6 automatically disappears and simultaneously or substantially simultaneously the flexible members 53, 53A pull the teat cup 6 into its seat, i.e. its plane of contact 54, at the carrier member 33. This rapid drop of the underpressure in the teat cup 6 and the withdrawal of the teat cup are beneficial to a low somatic cell count of the milk. The risk of illnesses, such as mastitis, is reduced thereby and milking is more agreeable to the animal. After all the teats have been milked, the robot arm rotates through approximately 180° to a position outside the milking station and the cow can leave the milking parlour.

A computer 13, which controls the feeding system and makes any further information available, is disposed near the feed trough. This computer 13 can, for example, control the quantity of fodder served to the cow in the feed trough. The cow has a collar 16 which forms part of cow- identification means. Two indication-information members 17, 18 are attached to the collar 16 of the cow A. The one information member co-operates with the computer-controlled feeding system. The other information member co-operates with the computer 14, which is provided near the rear side of the cow A and manages the process control of the milking robot 5. When the feeding system and the milking system comprising the said milking and cleaning devices 5, 63 and the computer 14, are mounted completely or partly separately, the advantage is obtained that supplies and repair operations of the individual systems are easier to perform and an automatic milking system can be used in a simple manner in addition to an existing feeding system. The cow-identification means are provided with a first microprocessor unit in which the relevant data for the fodder supply of an animal to be milked is stored, a second microprocessor unit in which the relevant data for the milking process of an animal to be milked is stored and with a transceiver system. The indication-information member 17 includes the first microprocessor unit with the transceiver system and is able to communicate with the transceiver system of the computer system for feeding the animal. The indication-information member 18 includes the second microprocessor with the first mentioned transceiver system and is able to communicate with the transceiver system of the computer system for controlling the milking robot 5 and the automatic milking. The pressure springs 45, 46 provided in the robot arm produce a flexible up and down motion, whereby the weight of a teat cup 6 and carrier member 33 is reduced. The up and down motion of the teat cup 6 can, as shown, be effected pneumatically. Furthermore, a stepper motor can adjust the length of the telescopic robot arm 29. The stepper motor structures can be replaced by hydraulic or pneumatic cylinders or suchlike structures. By means of the above-described straight guide members 22, 29 provided along and transversely to the milking parlour and by the pivotal motion about the shaft 28, a teat cup 6, mounted at the end of the robot arm, can be moved upwardly, downwardly and laterally and at the same time in all directions, after activation of the relevant stepper motor and/or adjusting cylinder.

The milking implement can still function adequately if two teats of the cow are adjacent to each other spaced apart by only a few centimetres, e.g. 2 cms, as, for example, the rearmost teat cups D1 and D2 are located in the initial position very closely to each other on their carrier member 33. This arrangement is important for a milking robot 5 which must always operate, also during the night, without any supervision.

The milking implement, comprised of a number of teat cups 6 which are connectable to a number of teats 7 of an animal, such as a cow A, is preferably used in a stable with freely moving cows or a similar such accommodation. The milking system comprising the said milking and cleaning implements and the computer 14, and the feeding system can then be of an automatic type and be designed such that the computers 13, 14 controlling the milking system and the feeding system allow a cow to enter the milking parlour, in accordance with the sequence in which she is recorded in the computer.

In addition, the milking system and the feeding system can be automated and designed such that the computers 13, 14 controlling the milking system and the feeding system ensure that a cow which is at the beginning of a lactation period is given priority, as regards her entrance to the milking parlour, over cows which are at the end of the lactation period. Therefore, the implement is provided with register means for registering the lactation period of the animals. Particularly, these register means are forming part of the second microprocessor unit of the cow-identification means, in which microprocessor unit the further relevant data for the milking process of the animal to be milked is stored. The computer system for controlling the milking robot comprises a special programme to ensure that the animals which are at the beginning of a lactation period are given priority for entering the milking parlour over animals which are not at the beginning of the lactation period.

The milking system and the feeding system may also be of such an automated construction and so designed that the computers 13, 14 controlling the milking system and the feeding system allow cows A into the milking parlour in accordance with serial numbers such as A1, A2, A3, A4, A5 etc., assigned to the cows A.

It is furthermore possible to milk a cow A in a stable with freely moving cows or a similar accommodation automatically, independently of an optional recording in a computer 14 controlling the system of the instant at which each cow was milked and independently of a predetermined period of time elapsed since the cow was milked last.

The invention is not limited to the features described in the foregoing with reference to the accompanying drawing, but also relates to all the details which have not been described but are shown in the drawings and defined in the claims. The invention also relates to all sorts of modifications of the embodiment, of course being within the protective scope of the accompanying claims.

## Claims

1. An implement for automatically milking an animal, comprising a milking parlour, a milking robot (5) with a carrier member (33) adapted to carry a number of teat cups (6) and a cleaning device (63) with cleaning elements (64) for cleaning the teats of the udder of an animal to be milked, **characterized in that** the milking robot (5) is mounted on a first straight guide member and the cleaning device (63) is mounted on a second straight guide member, both said first and second straight guide members being slidably disposed on a horizontal carrier which extends longitudinally at one of the longitudinal sides of the milking parlour, so that said first and second straight guide members are displaceable on said horizontal carrier independently of each other, while the carrier member (33) as well as the cleaning device (63) are rotatable about an upwardly directed axis from a position outside the milking parlour into a position under the animal.

2. An implement as claimed in claim 1, **characterized in that** the direction of rotation of the carrier member (33) from the rest position is opposite to the direction of rotation of the cleaning device (63) from the rest position.

3. An implement as claimed in claim 1 or 2, **characterized in that**, from their respective rest portions, the carrier member (3) and cleaning device (63) are able to follow circle-like curves to move through a foremost and a hindmost leg, the first part of which curves being directed opposite to each other.

4. An implement as claimed in claim 2 or 3, **characterized in that** the milking robot (5) is mounted in the rest position such that the carrier member (33) can be brought under the udder of the animal only by performing a rotation, while the cleaning device (63) is mounted in the rest position such that the cleaning elements (64) can be brought under the udder of the animal by performing a rotation followed by a translation in the longitudinal direction of the milk box.

5. An implement as claimed in any one of the preceding claims, **characterized in that** the rotation of the carrier member (33) and of the cleaning device (63) takes place over an angle of about 180°.

6. An implement as claimed in any one of the preceding claims, **characterized in that** the milking robot (5) and the cleaning device (63) are mounted rotatably at different heights.

7. An implement as claimed in any one of the preceding claims, **characterized in that** the milking robot (51) and the cleaning device (63) are displaceable along a guide member, forming part of the frame of the milking parlour.

8. An implement as claimed in any one of the preceding claims, **characterized in that** the milking robot (5) is provided with two horizontal guide members (22, 31) which are arranged approximately transversely relative to each other and by means of which the carrier member (33) is displaceable under the udder of an animal to be milked in such a manner that the teat cups (6) can be connected to the teats.

9. An implement as claimed in claim 8, **characterized in that** the displacement of the carrier member (33) by means of the guide members (22, 31) is controlled by threaded spindles (24, 48).

10. An implement as claimed in claim 8 or 9, **characterized in that** the teat cup (6) can be individually moved upwardly relative to the carrier member (33) pneumatically or hydraulically, while during milking the pressure on the pneumatic or hydraulic cylinders is withdrawn.

## Patentansprüche

1. Vorrichtung zum automatischen Melken eines Tieres, die einen Melkstand, einen Melkroboter (5) mit einem Träger (33) zum Tragen mehrerer Zitzenbecher (6) und eine Reinigungsvorrichtung (63) mit Reinigungselementen (64) zum Reinigen der Zitzen des Euters eines zu melkenden Tieres aufweist,
**dadurch gekennzeichnet, daß** der Melkroboter (5) an einer ersten geraden Führung und die Reinigungsvorrichtung (63) an einer zweiten geraden Führung angeordnet sind, wobei sowohl die erste als auch die zweite gerade Führung verschiebbar an einem horizontalen Träger angeordnet sind, der sich in Längsrichtung an einer der Längsseiten des Melkstandes erstreckt, so daß die erste und die zweite gerade Führung an dem horizontalen Träger unabhängig voneinander verschiebbar sind, wobei sowohl der Träger (33) als auch die Reinigungsvorrichtung (63) um eine aufwärts gerichtete Achse von einer Position außerhalb des Melkstandes in eine Position unterhalb des Tieres schwenkbar sind.

2. Vorrichtung nach Anspruch 1,
**dadurch gekennzeichnet, daß** die Schwenkrichtung des Trägers (33) aus der Ruhelage entgegengesetzt zu der Schwenkrichtung der Reinigungsvorrichtung (63) aus der Ruhelage ist.

3. Vorrichtung nach Anspruch 1 oder 2,
**dadurch gekennzeichnet, daß** der Träger (33) und die Reinigungsvorrichtung (63) aus ihren jeweiligen Ruhelagen auf kreisförmigen Bahnen zwischen einem Vorderbein und einem Hinterbein hindurchzubewegen sind, wobei der erste Teil der Bahnen jeweils in entgegengesetzter Richtung verläuft.

4. Vorrichtung nach Anspruch 2 oder 3,
**dadurch gekennzeichnet, daß** der Melkroboter (5) in der Ruhelage derart angeordnet ist, daß der Träger (33) lediglich durch Ausführen einer Schwenkbewegung unter das Euter des Tieres zu bewegen ist, während die Reinigungsvorrichtung (63) in der Ruhelage derart angeordnet ist, daß die Reinigungselemente (64) durch Ausführen einer Schwenkbewegung mit anschließender Translation in Längsrichtung der Melkbox unter das Euter des Tieres zu bewegen sind.

5. Vorrichtung nach einem der vorhergehenden Ansprüche, **dadurch gekennzeichnet, daß** die Schwenkbewegung des Trägers (33) und der Reinigungsvorrichtung (63) über einen Winkel von etwa 180° erfolgt.

6. Vorrichtung nach einem der vorhergehenden Ansprüche, **dadurch gekennzeichnet, daß** der Melkroboter (5) und die Reinigungsvorrichtung (63) in unterschiedlicher Höhe schwenkbar angeordnet sind.

7. Vorrichtung nach einem der vorhergehenden Ansprüche, **dadurch gekennzeichnet, daß** der Melkroboter (5) und die Reinigungsvorrichtung (63) längs einer Führung zu verschieben sind, die Teil des Rahmens des Melkstandes ist.

8. Vorrichtung nach einem der vorhergehenden Ansprüche, **dadurch gekennzeichnet, daß** der Melkroboter (5) zwei horizontale Führungen (22, 31) aufweist, die etwa rechtwinklig zueinander angeordnet sind, und durch die der Träger (33) in der Weise unter das Euter eines zu melkenden Tieres zu verlagern ist, daß die Zitzenbecher (6) an die Zitzen anzuschließen sind.

9. Vorrichtung nach Anspruch 8,
**dadurch gekennzeichnet, daß** die Verlagerung des Trägers (33) mittels der Führungen (22, 31) durch Gewindespindeln (24, 48) gesteuert ist.

10. Vorrichtung nach Anspruch 8 oder 9,
**dadurch gekennzeichnet, daß** der Zitzenbecher (6) pneumatisch oder hydraulisch relativ zu dem Träger (33) einzeln aufwärts zu bewegen ist, wobei die pneumatischen oder hydraulischen Zylinder während des Melkens druckentlastet werden.

## Revendications

1. Dispositif de traite automatique d'un animal, comprenant une stalle de traite, un robot trayeur (5) avec un organe porteur (33) adapté pour porter un certain nombre de godets de trayons (6) et un dispositif de nettoyage (63) avec des éléments nettoyeurs (64) pour nettoyer les trayons du pis d'un animal à traire, **caractérisé en ce que** le robot trayeur (5) est monté sur un premier organe de guidage droit et le dispositif de nettoyage (63) est monté sur un second organe de guidage droit, lesdits permier et second organes de guidage droit étant disposés coulissants sur un support horizontal qui s'étand longitudinalement sur un des côtés longitudinaux de la stalle de traite, de sorte que lesdits permier et second organes de guidage droit puissent être déplacés sur ledit support horizontal indépendament l'un de l'autre, tandis que l'organe porteur (33) ainsi que le dispositif de nettoyage (63) sont rotatifs autour d'un axe dirigé vers le haut à partir d'une position à l'extérieur de la stalle de traite jusqu'en une position sous l'animal.

2. Dispositif selon la revendication 1, **caractérisé en ce que** le sens de rotation de l'organe porteur (33) à partir de la position de repos est opposé au sens de rotation du dispositif de nettoyage (63) à partir de la position de repos.

3. Dispositif selon la revendication 1 ou 2, **caractérisé en ce qu'**à partir de leurs positions respectives de repos, l'organe porteur (33) et le dispositif de nettoyage (63) sont capables de suivre des courbes en arc de cercle pour passer entre une patte antérieure et une patte postérieure, la première partie de ces courbes étant en sens opposé l'une à l'autre.

4. Dispositif selon la revendication 2 ou 3, **caractérisé en ce que** le robot trayeur (5) est monté en position de repos de telle sorte que l'organe porteur (33) puisse être amené sous le pis de l'animal, seulement en exécutant une rotation, tandis que le dispositif de nettoyage (63) est monté en position de repos de telle sorte que les éléments nettoyeurs (64) puissent être amenés sous le pis de l'animal en exécutant une rotation suivie d'une translation dans le sens longitudinal de la stalle de traite.

5. Dispositif selon l'une quelconque des revendications précédentes, **caractérisé en ce que** la rotation de l'organe porteur (33) et du dispositif de nettoyage (63) a lieu sur un angle d'environ 180°.

6. Dispositif selon l'une quelconque des revendications précédentes, **caractérisé en ce que** le robot trayeur (5) et le dispositif de nettoyage (63) sont montés rotatifs à des hauteurs différentes.

7. Dispositif selon l'une quelconque des revendications précédentes, **caractérisé en ce que** le robot trayeur (5) et le dispositif de nettoyage (63) sont mobiles le long d'un organe de guidage faisant partie du bâti de la stalle de traite.

8. Dispositif selon l'une quelconque des revendications précédentes, **caractérisé en ce que** le robot trayeur (5) est muni de deux organes de guidage (22, 31) horizontaux qui sont disposés approximativement transversalement l'un à l'autre et au moyen desquels l'organe porteur (33) peut être amené sous le pis d'un animal à traire de telle manière que les godets de trayons (6) puissent être relié aux trayons.

9. Dispositif selon la revendication 8, **caractérisé en ce que** le déplacement de l'organe porteur (33) au moyen des organes de guidage (22, 31) est commandé par des vis6mères (24, 48).

10. Dispositif selon la revendication 8 ou 9, **caractérisé en ce que** le godet de trayon (6) peut être soulevé, par rapport à l'organe porteur (33) par des moyens pneumatiques ou hydrauliques, tandis que, pendant la traite, la pression sur les vérins pneumatiques ou hydrauliques est retirée.
